(19)

Europäisches
Patentamt
European
Patent Office
Office européen
des brevets

(11) **EP 1 962 413 A1**

(12) **EUROPEAN PATENT APPLICATION**

(43) Date of publication:
   **27.08.2008 Bulletin 2008/35**

(51) Int Cl.:
   ***H02M 1/15*** $^{(2006.01)}$

(21) Application number: **07300808.8**

(22) Date of filing: **22.02.2007**

(84) Designated Contracting States:
   **AT BE BG CH CY CZ DE DK EE ES FI FR GB GR
   HU IE IS IT LI LT LU LV MC NL PL PT RO SE SI
   SK TR**
   Designated Extension States:
   **AL BA HR MK RS**

(71) Applicants:
   • **STMicroelectronics SA
   92120 Montrouge (FR)**
   • **Nokia Corporation
   02150 Espoo (FI)**

(72) Inventors:
   • **Pinon, Vincent
   38000 Grenoble (FR)**
   • **Robert, Pascale
   38660 Lumbin (FR)**
   • **Grigore, Vlad
   01640 Vantaa (FI)**

(74) Representative: **Delprat, Olivier
   Bureau Casalonga & Josse
   Bayerstrasse 71/73
   80335 München (DE)**

(54) **Ripple compensator and switching converter comprising such a ripple compensator**

(57)    This ripple compensator for a switching converter of the type having switching means (3) and filtering means (5) comprises means (6) for injecting a compensating current ($i_{RIP}$) such that the AC component of the switching current and the compensating current are in opposite phase.

   In addition, the compensation current is elaborated from a signal ($V_{LX}$) at a node between the switching means and the filtering means.

# FIG.3

EP 1 962 413 A1

**Description**

The present invention relates to switching converters, and, in particular, to DC-DC switching converters.

More specifically, the invention relates to an improvement to such DC-DC switching converters intended to reduce or eliminate a switching ripple generated in the output voltage.

DC-DC switching converters are usually used in power supplies for generating an output supply voltage in many electronic circuits and systems, due in particular to their high power efficiency.

Another useful application for such DC-DC switching converters is directed to RF transmitters, where they are used to control the supply voltage of a radio frequency power amplifier.

DC-DC switching converters are very power efficient because their operating principle relies on power switches that are either ON or OFF such that the theoretical efficiency is of 100 %.

However, the DC-DC switching converters are based on the use of power switches controlled by Pulse Width Modulation (PWM) associated with an output LC filter used to generate an output voltage corresponding substantially to the DC component of the voltage delivered by the power switches.

However, it has been noticed that the switching action of the power switches generates a ripple in the output voltage of the converter.

This output voltage ripple is responsible of unwanted spurious for many applications.

This is due to the switching of the current flowing into a self of the output filter of the converter.

The switching ripple must be kept below a certain limit that is dependant on the application (e.g. max. 20mV). In order to do so, the corner frequency $F_c$ of the LC output filter must be low enough when compared to the switching frequency Fs of the switching current. In practice, this corresponds in general to physically large inductor and capacitor. Even for state-of-the-art switching frequency of several MHz, their values are too big to be integrated.

Besides, in some applications, it is necessary to ramp up or down the output voltage from or to zero in a specified amount of time, (for example 30ns). However, there is a trade-off between the dynamic response of the converter and the corner frequency $F_c$ of the LC filter. The lower the corner frequency when compared to the switching frequency, the lower the switching ripple but the slower the dynamic response.

When used in a RF power amplifier, the harmonic content due to the switching ripple of the power amplifier supply voltage translates into RF spurs around the carrier in the RF spectrum at the output of the power amplifier. This is a problem, as the specification regarding RF emissions is tight, especially concerning noise in receiver band. The effect is much more pronounced in saturated power amplifiers, when compared to linear power amplifiers.

In the state of the art, it has already been provided some solutions to try to alleviate this drawback.

Reference can for example be made to the article "Novel aspects of an application of "zero"-ripple techniques to basic converter topologies", IEEE 1997.

This solution is based on the use of a specific arrangement of the coils in the output filter of the converter.

However, the technology disclosed in this document is directed to a modification of the output filter circuitry.

Reference can also be made to the article "Modified switched power converter with zero ripple", IEEE 1990.

Ripple compensation is based on the use of an analog controlled current source which is intended to inject a current into the load which is equal and opposite to the ripple current due to the switching circuit.

More particularly, according to this technology, a feedback loop is used, which relies on the measuring of the output voltage that is applied to the load. The injected current is thus controlled in order to reduce or eliminate the difference between a desired load current and the current from the switching circuit.

However, the error should be kept as small as possible such that this technology relies on the control of a small signal that can be easily affected by noise. In addition, this technology needs to provide a large gain to generate the compensating current.

At last, this technology requires a fast and precise current sense which is generally costly and difficult to lay out.

In view of the foregoing, the invention proposes a ripple compensator which overcomes the drawbacks of the state of the art.

In particular, one object of the invention is to provide a ripple compensator which can reduce or eliminate the ripple in an inexpensive arrangement and which can be easily integrated without needing to modify the switching converter.

Another object of the invention is to provide such a ripple compensator with high dynamic features.

Accordingly, the invention proposes a ripple compensator for a switching converter of the type having switching means and filtering means.

The compensator according to the invention comprises means for injecting a compensating current such that the AC component of the switching current issued from the switching means and the compensating current are in opposite phase.

In addition, according to a general feature of the invention, the compensating current is elaborated from a signal at a node between the switching means and the filtering means.

The signal used to generate the compensating current is the voltage directly delivered by the switching means and therefore has a large amplitude. It can therefore be easily measured as compared with the compensators according to the state of the art using the signal issued from the filtering means.

In addition, the ripple compensator according to the invention can be realized in the form of a block which can be easily added to an existing switching converter design since it only needs a connection to the output of the switching means and to the output of the filtering means to inject the compensating current.

Furthermore, on the contrary to the uncompensed switching converters which require filtering means having a large inductor L and a large capacitor C for the switching means in order to keep the value of the corner frequency of the filtering means low enough when compared to the switching frequency of the switching means, such that the inductor and the capacitor are generally too big to be integrated, according to the invention, the requirements concerning the inductor and the capacitor can be relaxed such that the switching converter can be integrated on a relatively small area.

According to another feature of the invention, the ripple compensator comprises measuring means for measuring the voltage at the node between the switching means and the filtering means.

According to yet another feature of the invention, the compensator comprises further means for modelizing the filtering means of the switching converter generating the ripple.

According to one embodiment of the invention, the means for modelizing the filtering means comprise a filter adapted to generate a compensation voltage proportional to a ripple current generated in said filtering means.

For example, the compensator further comprises means for converting the compensation voltage into the compensating current and means for adding said compensating current and said ripple current.

It further comprises means for amplifying the compensating current.

According to another feature of the invention, the compensator comprises elimination means for eliminating the DC component of the compensating current.

For example, said elimination means comprise a high-pass filter.

According to one embodiment of the invention, the compensator comprises means to vary the level of compensation provided by said compensation.

According to another aspect, the invention provides a switching converter of the type having switching means for generating a switched voltage and filtering means for filtering said switched voltage, characterized in that it further comprises a ripple compensator as defined above.

This switching converter constitutes, in one embodiment, a DC/DC switching converter.

Other features and advantages of the present invention will become apparent from the following description, in view of the appended drawings, in which:

- figure 1 illustrates schematically a DC/DC switching converter according to the state of the art ;
- figure 2 illustrates waveforms of the relevant signals of the circuit of figure 1 ;
- figure 3 illustrates schematically a DC/DC switching converter provided with a ripple compensator according to the invention ;
- figure 4 illustrates waveforms of the relevant signals of the circuit of figure 3 ;
- figure 5 illustrates the implementation of a ripple compensator according to the invention ;
- figure 6 is a Bode diagram of a coil current within the filtering means and of the compensating current ;
- figure 7 illustrates the variation of the output voltage of the DC/DC switching converter as a function of time when the ripple compensator is enabled, on the one hand, and disabled, on the other hand ;
- figure 8 illustrates another embodiment of a ripple compensator according to the invention ; and
- figure 9 illustrates waveforms of relevant signals of the embodiments of figure 8.

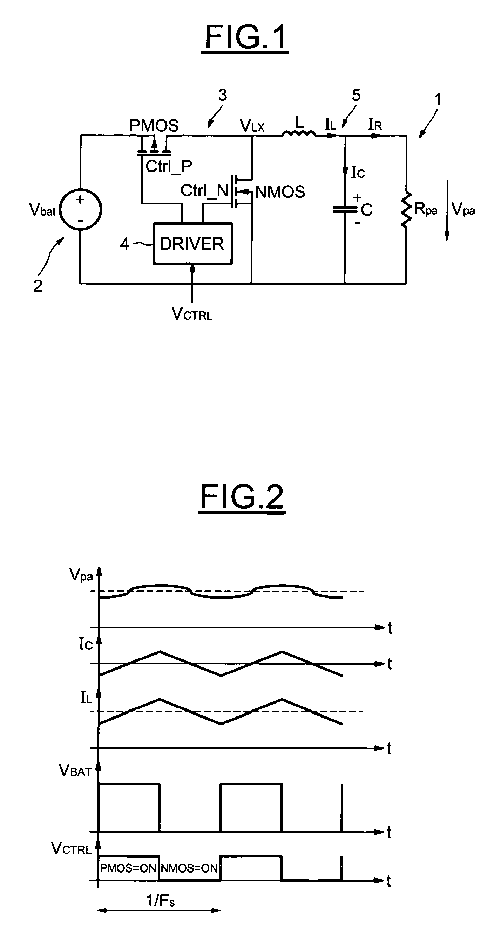

Referring to figure 1, a DC/DC switching converter is disclosed.

As illustrated, the converter, denoted by numeral reference 1, comprises a DC supply voltage source 2 consisting in a battery; switching means 3 either in an ON-state or in an OFF-state under the control of a driver 4 receiving a control signal $V_{CTRL}$ ; and filtering means constituted by a LC output filter.

For example, the object of this switching converter is to provide a supply voltage Vpa of high efficiency through a load resistance Rpa for an RF power amplifier.

The switching means comprise, as disclosed, PMOS and NMOS devices controlled by Pulse Width Modulation signal Ctrl_P and Ctrl_N respectively, issued by the driver 4, and turned ON and OFF alternatively at a switching frequency Fs.

The resulting pulse width modulated voltage $V_{LX}$ is filtered by the output LC filter, which has typically a corner frequency much lower than the switching frequency Fs of the switching means.

Thus, the output voltage Vpa corresponds, as a first approximation, to the DC component of the voltage $V_{LX}$.

However, as previously indicated, a switching ripple, due to the switching of the current flowing into the self L, is present in the output voltage Vpa, as illustrated in figure 2.

It has been noticed that the magnitude of the ripples in the output voltage Vpa is given by the following relation:

$$\Delta V_{pa} = \frac{\alpha.(1-\alpha)V_{bat}}{8.L.C.F_s^2} \qquad (1)$$

where :

- $\alpha$ is the duty cycle of the PWM;
- $F_s$ is the switching frequency of the PWM;
- $V_{bat}$ is the voltage provided by the battery 2.

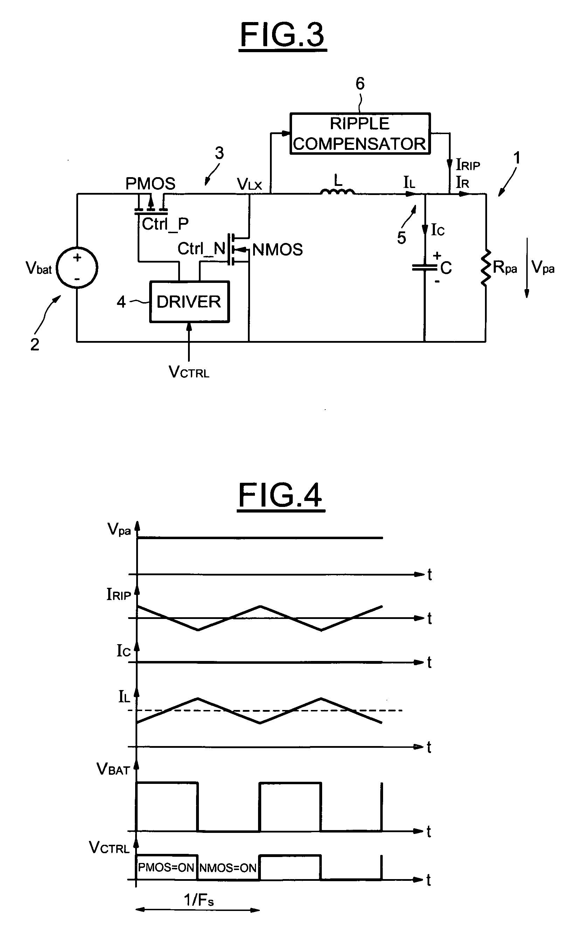

Referring to figures 3 and 4, according to the invention, the DC/DC switching converter is associated with a ripple compensator used to inject at the output of the DC/DC switching converter a compensating current $i_{RIP}$ having a phase opposite to that of the AC component of the inductor current $i_L$ generating the ripple in order to eliminate the ripple in the output voltage Vpa (figure 4).

As shown in figure 3, the ripple compensator, denoted by numeral reference 6, is connected in parallel to the inductor L.

In other words, the compensating current is elaborated from the output signal $V_{LX}$ of the switching means. This voltage $V_{LX}$ is filtered in such a way that said output is proportional to the inductor current $i_L$ at the switching frequency $F_s$. The DC contribution is also filtered in order not to affect the pass band of the converter. Then, the output voltage filtered is inverted and converted into a current to be injected into the capacitor of the filtering means, after amplification.

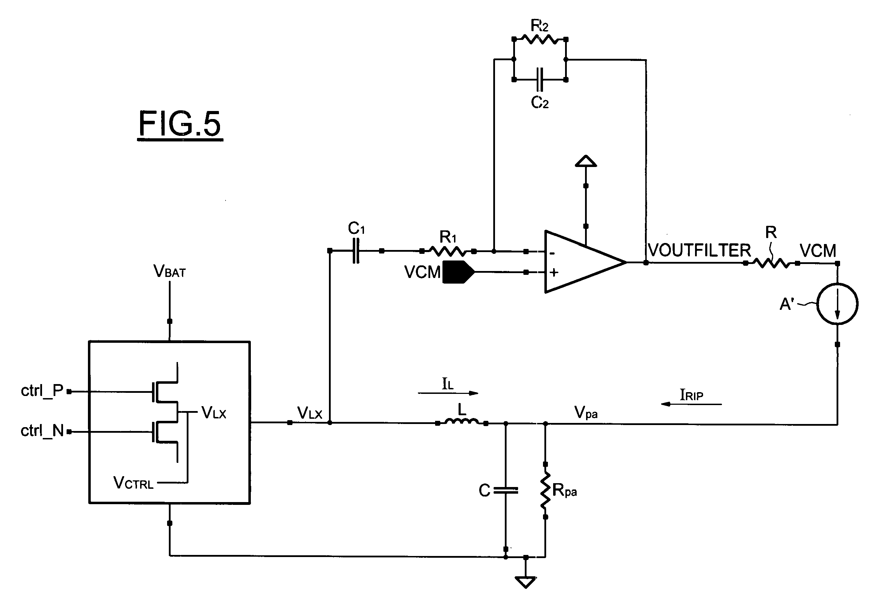

The general structure of the ripple compensator according to the invention is illustrated in figure 5.

This compensator essentially comprises a band pass filter.

As shown in figure 5, this filter essentially comprises an operational amplifier A having its negative entry connected to the switching voltage $V_{LX}$ using a resistance R1 and a capacitor C1 in series to measure the said switching voltage, a positive input receiving a control voltage $V_{CM}$ and having its output $V_{out}$ connected to the negative input, by means of a filter circuitry consisting of one resistance R2 and one capacitor C2 in parallel, as shown.

It will be noted that the first resistance R1 together with the filter circuitry R2 C2 constitutes a low pass filter and an integrator part of the ripple compensator whose parameters can be determined to fit the current response of the inductor coil at the switching frequency $F_s$.

In addition, the first capacitor C1 together with the filter circuitry R2 C2 constitutes a high pass filter and the derivator part of the ripple compensator used to filter the DC component of the $V_{LX}$ signal.

As previously indicated, the output $V_{OUTFILTER}$ of the amplifier A is converted into current using a resistance R. It should also be noted that the switching voltage $V_{LX}$ is entered to the negative entry of the operational amplifier A such that the output voltage of the switching means is first inverted. After conversion into current, it is then amplified using a current amplifier A' such that the current delivered by the ripple compensator and injected into the output of the switching converter to be added to the output current of the switching means has the same magnitude than that of the ripples but with an opposite phase.

The filter transfer function of the ripple compensator is given by the following relation:

$$\frac{V_{OUTFILTER}}{V_{LX}} = \frac{-R_2.C_1.S}{(1+R_1.C_1.S)(1+R_2.C_2.S)} \qquad (2)$$

Besides, the ripple compensating current $i_{RIP}$ as a function of the $V_{LX}$ voltage is given by the following equation:

$$\frac{i_{RIP}}{V_{LX}} = -gm\frac{R_2.C_1.S}{(1+R_1.C_1.S)(1+R_2.C_2.S)} \qquad (3)$$

where gm is the transconductance to convert the control signal $V_{outfilter}$ into the active current $I_{RIP}$.

In addition, the value of the inductor current $i_L$ generating the ripple as a function of the $V_{LX}$ voltage is given by the following relation:

$$\frac{i_L}{V_{LX}} = \frac{1}{R_{pa}} x \frac{1 + R_{pa}.C.S}{1 + (L/R_{pa}).S + L.C.S^2} \qquad (4)$$

In order to have the compensating current equal to the coil current such that the compensator constitutes a modelization of the part of the filtering means of the converter generating the ripple, the following condition must be obtained:

$$\frac{-gm}{R_1.C_2} = \frac{1}{L} \qquad (5)$$

wherein gm is the conductance realized in this embodiment by the resistance R and the current amplifier A'.

In view of the foregoing, by suitably selecting the resistances R and R1 and the capacitor C2, it is possible to compensate the ripples generated by the switching of the current flowing into the self L.

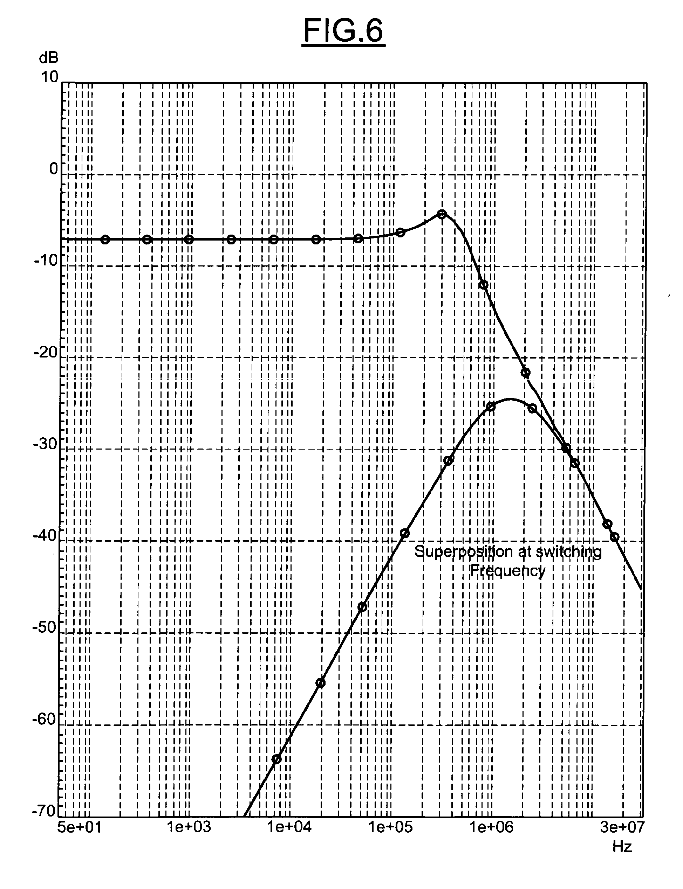

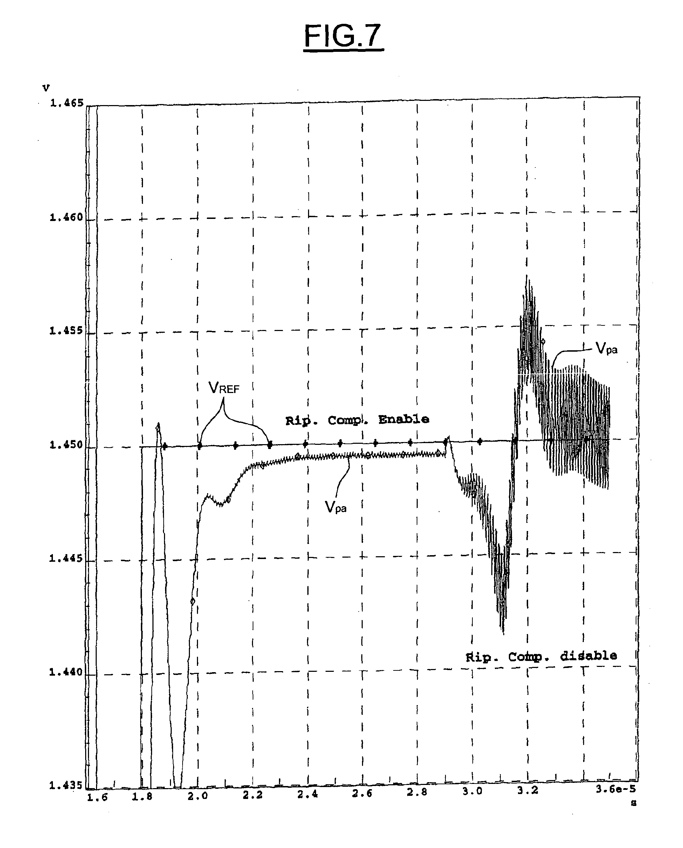

As a matter of fact, referring to figures 6 and 7, illustrating respectively the inductor current $i_L$ and the compensating current $i_{RIP}$ at the switching frequency on the one hand, and the output voltage Vpa relative to the desired output voltage $V_{REF}$, on the other hand, the compensating current is superposed to the inductor current at the switching frequency such that, when the ripple compensator is enabled, the ripples are eliminated without affecting the DC component.

For example, for a inductor value L of 1 $\mu$H, for a maximum amplitude current the ripple compensator will have to provide of +/- 53 mA, for a maximum amplitude tolerated at the output of the filter of 0, 53 volt, using relation (3), the transconductance gm of the system is 0, 1.

Using equation (5), R1 is for example equal to 100 Kohm and C2 is 1 pF.

As concerns the current conversion between the output voltage filter and the input current amplifier A', a low resistance value R will lead to a low gain but a too low resistance will affect the low input impedance of the current amplifier.

At the opposite, a too high resistance R implies a too high gain for the current amplifier A', which is difficult to design. A compromise is chosen and the resistance value R is fixed to 1 Kohm. The gain of the current amplifier A' is 100 to have the required transconductance gm of 0, 1.

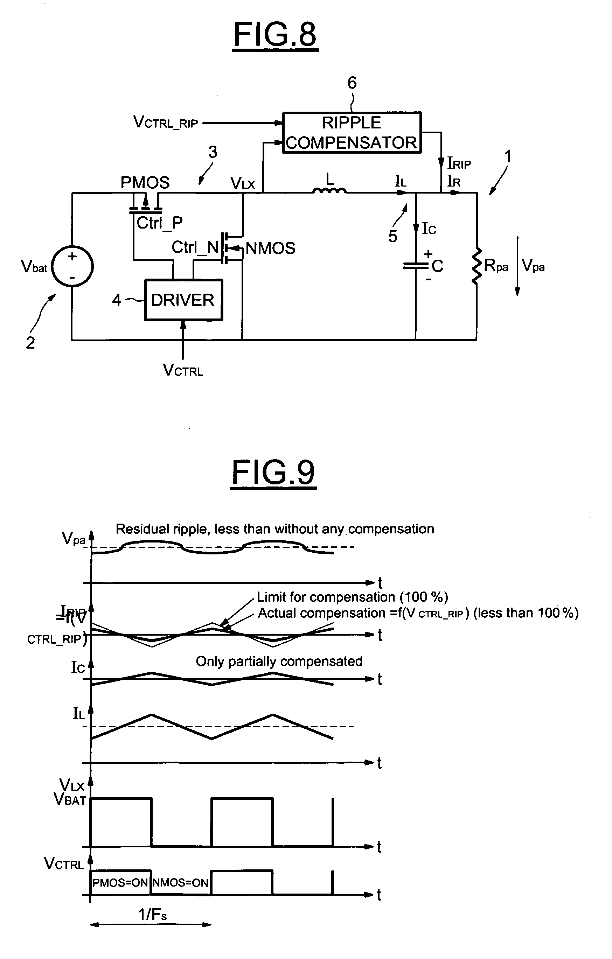

Referring to figures 8 and 9, a partial ripple compensator is now disclosed.

The ripple compensator has a negative impact on the overall power efficiency of the converter. The overall efficiency is, in principle, inversely proportional to the amount of ripple compensation, i.e. the better the ripple compensation, the lower the efficiency.

Consequently, according to the embodiment illustrated in figure 8, the ripple compensator 6' which is in other aspects identical to that of figures 3 and 5 receives, as an input, a ripple compensation voltage control $V_{CTRL\_RIP}$ acting for example on the current amplifier A' to lower, when necessary, the compensation.

For example, as disclosed in figure 9, the ripple compensation current can be thus set within a range up to an upper limit corresponding to a full compensation of the ripple.

For example, the ripple compensation can be partial all the time, the percentage of a ripple compensation being required by the application. The percentage of the ripple compensation is thus predefined, namely decided during the design phase of the system voltage supply incorporating the switching converter, based on specific requirements.

The percentage of ripple compensation can also be controlled dynamically. The voltage supply system can thus prescribe an amount of ripple compensation desired at a given moment.

At last, the ripple compensation can be made partial for calibration purposes. As a matter of fact, one problem associated with the generation of ripple compensation current is that the inductance L affects directly the amplitude of the compensating current. Power inductors may have +/- 20% of tolerance and this variation will affect the quality of ripple compensation.

Moreover, the switching voltage $V_{LX}$ is not an ideal pulse width modulated signal, due to limited raise/fall time and non-zero value during the intervals when the low side switch is conducting. The additional control voltage $V_{CTRL\_RIP}$ uses a possibility to calibrate the ripple compensation in manufacturing and/or online, if the ripple can be measured and the feedback is closed to the control voltage $V_{CTRL\_RIP}$ to minimize the ripple.

**Claims**

1. Ripple compensator for switching converter of the type having switching means (3) and filtering means (5), said compensator comprising means (6) for injecting a compensating current ($i_{RIP}$) such that the AC component of the switching current issued from the switching means and the compensating current are in opposite phase, **characterized in that** the compensating current ($i_{RIP}$) is elaborated from a signal ($V_{LX}$) at a node between the switching means and the filtering means.

2. Ripple compensator according to claim 1, **characterized in that** it comprises measuring means for measuring the voltage at said node between the switching means and the filtering means.

3. Ripple compensator according to claim 2, characterize in that it further comprises means for modelizing the filtering means of the switching converter generating the ripple.

4. Ripple compensator according to claim 3, **characterized in that** said means for modelizing the filtering means comprise a filter (R1, C1, R2, C2) adapted to generate a compensation voltage ($V_{OUTFILTER}$) proportional to a ripple current generated in said filtering means.

5. Ripple compensator according to claim 4, **characterized in that** it further comprises means (R) for converting the compensation voltage into the compensating current and means for adding said compensation current and said ripple current.

6. Ripple compensator according to claim 5, **characterized in that** it comprises means (A') for amplifying the compensating current.

7. Ripple compensator according to claim 5 or 6, **characterized in that** it comprises elimination means for eliminating the DC component of the compensation current.

8. Ripple compensator according to claim 7, **characterized in that** said elimination means comprise a high-pass filter (C1, R2, C2).

9. Ripple compensator according to any of claims 1 to 8, **characterized in that** it comprises means to vary the compensation provided by said compensation.

10. Switching converter of the type having switching means for generating a switched voltage and filtering means for filtering said switched voltage, **characterized in that** it further comprises a ripple compensator according to any of claims 1 to 9.

11. Switching converter according to claim 10, **characterized in that** it constitutes a DC/DC switching commutator.

## FIG.1

## FIG.2

## FIG.3

## FIG.4

**FIG.5**

## FIG.6

## FIG.7

## FIG.8

## FIG.9

**European Patent Office** EUROPEAN SEARCH REPORT

Application Number

EP 07 30 0808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 929 692 A (BRUCE W. CARSTEN) 27 July 1999 (1999-07-27) * abstract * * figures 3,5,6 * * column 1, line 55 - line 66 * * column 3, line 49 - line 63 * * column 4, line 5 - line 58 * ----- | 1-11 | INV. H02M1/15 |
| X | US 5 668 464 A (PHILIP T. KREIN ET AL) 16 September 1997 (1997-09-16) * abstract * * figures 1b,3-6,9 * * column 2, line 34 - line 39 * ----- | 1-11 | |
| X | US 6 897 641 B1 (EDWARD HERBERT) 24 May 2005 (2005-05-24) * abstract * * figures 2,3 * * column 1, line 13 - line 30 * ----- | 1 | |
| X | US 4 667 279 A (CRAIG P. MAIER) 19 May 1987 (1987-05-19) * abstract * * figure 6 * ----- | 1 | TECHNICAL FIELDS SEARCHED (IPC) H02M |
| X | US 2005/083132 A1 (MAMORU TSURUYA) 21 April 2005 (2005-04-21) * abstract * * figure 1 * ----- | 1 | |
| X | DE 198 49 019 A (FUJI ELECTRIC) 29 April 1999 (1999-04-29) * abstract * * figure 6 * ----- | 1 | |
| | -/-- | | |

The present search report has been drawn up for all claims

| Place of search | Date of completion of the search | Examiner |
|---|---|---|
| The Hague | 4 March 2008 | Lund, Michael |

EPO FORM 1503 03.82 (P04C01)

<table>
<tr><td><strong>European Patent Office</strong></td><td><strong>EUROPEAN SEARCH REPORT</strong></td><td>Application Number<br>EP 07 30 0808</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2004 015082 A (STZ MECHATRONIK)<br>27 October 2005 (2005-10-27)<br>* paragraphs [0016], [0021] *<br>* figure 3 *<br>----- | 1 | |
| A | DE 197 41 430 A (SIEMENS)<br>1 April 1999 (1999-04-01)<br>* column 2, line 61 - column 3, line 18 *<br>* figure 2 *<br>----- | 7,8 | |
| E | WO 2007/107919 A (KONINKLIJKE PHILIPS ELECTRONICS)<br>27 September 2007 (2007-09-27)<br>* abstract *<br>* figure 1 *<br>----- | 1 | |

TECHNICAL FIELDS SEARCHED (IPC)

The present search report has been drawn up for all claims

| Place of search | Date of completion of the search | Examiner |
|---|---|---|
| The Hague | 4 March 2008 | Lund, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 30 0808

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2008

| Patent document cited in search report | | Publication date | Patent family member(s) | | Publication date |
|---|---|---|---|---|---|
| US 5929692 | A | 27-07-1999 | NONE | | |
| US 5668464 | A | 16-09-1997 | AU | 4105296 A | 23-05-1996 |
| | | | WO | 9613766 A1 | 09-05-1996 |
| US 6897641 | B1 | 24-05-2005 | NONE | | |
| US 4667279 | A | 19-05-1987 | NONE | | |
| US 2005083132 | A1 | 21-04-2005 | WO | 2005039031 A1 | 28-04-2005 |
| | | | JP | 2005124339 A | 12-05-2005 |
| | | | US | 2006244527 A1 | 02-11-2006 |
| DE 19849019 | A | 29-04-1999 | JP | 11196569 A | 21-07-1999 |
| | | | TW | 434986 B | 16-05-2001 |
| | | | US | 6021054 A | 01-02-2000 |
| DE 102004015082 | A | 27-10-2005 | NONE | | |
| DE 19741430 | A | 01-04-1999 | WO | 9916165 A1 | 01-04-1999 |
| WO 2007107919 | A | 27-09-2007 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Novel aspects of an application of ''zero''-ripple techniques to basic converter topologies. *IEEE,* 1997

- Modified switched power converter with zero ripple. *IEEE,* 1990